# EUROPEAN PATENT APPLICATION

(11) **EP 3 604 901 A1**
(43) Date of publication of application: **05.02.2020**
(21) Application number: 19193556.8
(22) Date of filing: 21.01.2016
(51) Int. Cl.: F21S 10/04, F21V 23/00, F21K 9/232, H05B 37/02, F21K 9/238, F21V 23/04, F21Y 107/30, F21Y 107/40

(54) **LIGHT SOURCE, PARTICULARLY FOR 360-DEGREE LED LIGHT-EMITTING FLAME LAMP**

(30) Priority: 05.05.2015 CN 201510152837
(62) Divisional of application: 16789015.1
(71) Applicant: Mumedia Photoelectric Limited, Guangzhou, Guangdong 510460 (CN)
(72) Inventor: WEI, Ninghua, Guangzhou, Guangdong 510460 (CN)
(74) Representative: Sun, Yiming

(57) **Abstract**

A 360-degree LED light source (2) for a light-emitting flame lamp capable of simulating a flame shaking effect comprises a lamp housing (201) and a base (202) disposed at one end of the lamp housing. A lamp holder (203) is disposed on the base. A lamp panel support (204) is disposed in the lamp housing. The outer surface of the lamp panel support is covered with a columnar or polyhedral LED circuit board (205). LED lamp beads (206) are distributed on the LED circuit board. A control circuit board (207) and a driving power source (208) are sequentially and electrically connected between the LED circuit board and the lamp holder. The control circuit board outputs PWM signals according to a certain time sequence so as to control the LED lamp beads to be turned on and turned off and to flicker, and the driving power source drives the control circuit board and the LED circuit board to work. The LED light source (2) achieves a flame jumping effect in various directions by 360 degrees at the outer portion of the lampshade (1), and the flame effect is formed by means of light emission of the light source (2), so as to achieve the objectives of being free of noise and reducing power consumption and making the flame lamp suitable for indoor and outdoor use.

## Description

### FIELD OF THE INVENTION

This invention relates to an LED light source, more particularly, an LED light source for use in a 360-degree LED light-emitting flame lamp that is capable of simulating a flame shaking effect.

### BACKGROUND OF THE INVENTION

With the development of technology, LEDs continue to gain wider applications. Squares, gardens, and the like can be made more lively with colorful lights emitted by various floodlights including LED street lights, garden lights, etc. Different colour tones can bring different render effects to the surrounding environment.

In addition to lighting effects, some lamps also have decorative effects. Within the many different forms of lamps, there exists a kind of flame lamp that is capable of simulating the leaping and flickering of burning flames. A traditional flame lamp employs a lit quartz light bulb and a red silk ribbon that is blown by a fan. The light bulb shines onto the red silk ribbon, giving the lamp the look of a burning flame. However, due to the presence of the fan, noises are unavoidable, and power consumption is increased. These lamps are limited to indoor use and are not environmentally friendly.

### SUMMARY OF THE INVENTION

The present invention provides an LED light source, particularly for use in a 360-degree light-emitting flame lamp, that is free of noise, has reduced power consumption and is suitable for indoor and outdoor use.

The technical solution of the present invention is an LED light source comprising a lamp shell and a base provided at one end of the lamp shell, a lamp cap is provided on the base, a lamp board holder is provided inside the lamp shell, the lamp board holder is wrapped with a cylindrical or polyhedral shaped LED circuit board, a plurality of LED bulbs are arranged on the LED circuit board, the LED circuit board, a control circuit board, a power supply and the lamp cap are consecutively electrically connected, the control circuit board comprises a controller, the controller is connected to a filter module and a voltage regulator stabilizer which are both connected to the power supply, and a PWM (Pulse Width Modulation) driving circuit which is connected to the LED circuit board, the controller sends timing signals to the PWM driving circuit, the PWM driving circuit outputs PWM signals according to the timing signals received, to control the on/off and blinking of the LED bulbs, in order to achieve a flame-like effect.

Preferably, the LED bulbs are arranged in a wavy shape on an upper part of the LED circuit board, and the LED bulbs are arranged in a matrix on middle and lower parts of the LED circuit board; when the upper, wavy-shape arranged LED bulbs are all or successively lit, a flame-tip shape is formed; when the middle and lower, matrix-arranged LED bulbs are all lit, shape of a main flame body is formed.

Preferably, the PWM driving circuit includes a PWM modulation circuit that is connected to the controller and an IC (Integrated Circuit) driving unit that is connected to the PWM modulation circuit, the IC driving unit is connected to the LED circuit board.

Preferably, said controller is further connected to an infrared receiving module and a DMX (Digital Multiplex) input module.

Preferably, the infrared receiving module comprises an infrared receiving head, said infrared receiving head is connected to an IO (input/out) port of the controller via a pull-up resistor to stabilize signal.

Preferably, the DMX input module comprises a signal-stabilizing DMX driver IC and an anti-jamming protection circuit.

Preferably, the lamp shell is a cylindrical-shaped hollow shell with two open ends, the base is provided at one open end of the lamp shell, and a top cover is provided at the other open end of the lamp shell.

Preferably, the lamp board holder is one rectangular frame or two or more rectangular frames.

Preferably, the lamp board holder is provided with an opening on the side of its frame corresponding to the base, a wire connecting the power supply and the lamp cap is passed through the opening, or the power supply is mounted at the opening.

Preferably, the LED circuit board is a flexible LED circuit board, said flexible LED circuit board is wrapped around and fixed to the lamp board holder.

As a result of the above-mentioned solution, the 360-degree LED light-emitting flame lamp of the present invention has a multi-directional flame jumping effect when viewed from 360 degrees sideways through the lamp shade. This is achieved through the control of the on/off and blinking of the LED bulbs on the cylindrical or polygonal LED circuit board in a certain time sequence. The flame effect is formed by means of light emission of the light source, so the use of devices such as fans and ribbons are avoided. Therefore, the objective of creating a flame lamp that is free of noise, has reduced power consumption and is suitable for both indoor and outdoor use is achieved.

### BRIEF DESCRIPTION OF THE DRAWINGS

Figure 1 is a schematic view of a lamp shade according to an embodiment of the present invention.
Figure 2 is an exploded view of a light source according to an embodiment of the present invention.
Figure 3 is a schematic view of a control circuit board module according to an embodiment of the present invention.
Figure 4 is a schematic view of an LED circuit board according to an embodiment of the present invention.
Figure 5 is a schematic view of a circuit layout of an LED circuit board according to an embodiment of the present invention.
Figure 6 is a schematic view of a lamp board holder according to an embodiment of the present invention.

### DETAILED DESCRIPTION OF THE ILLUSTRATED EMBODIMENTS

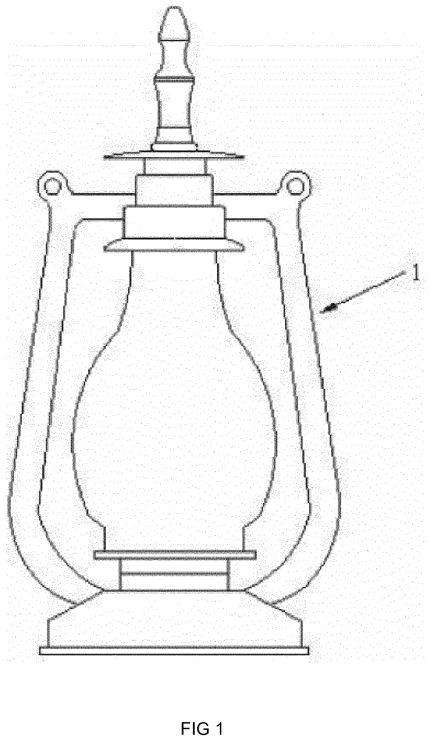

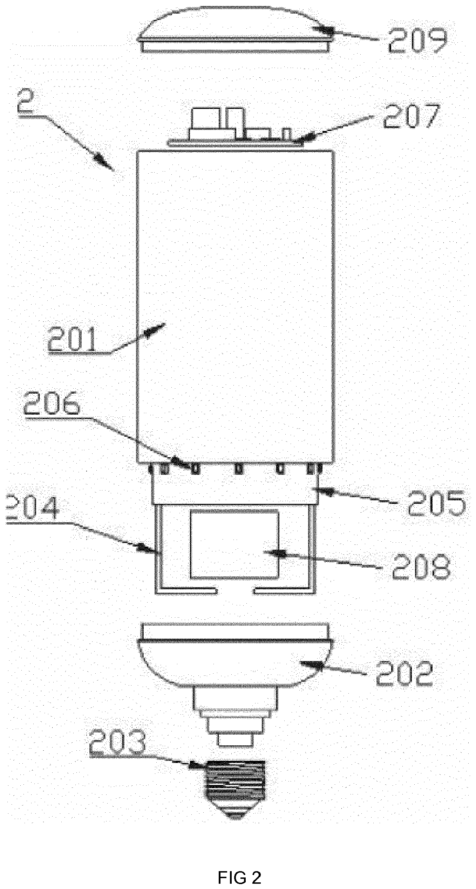

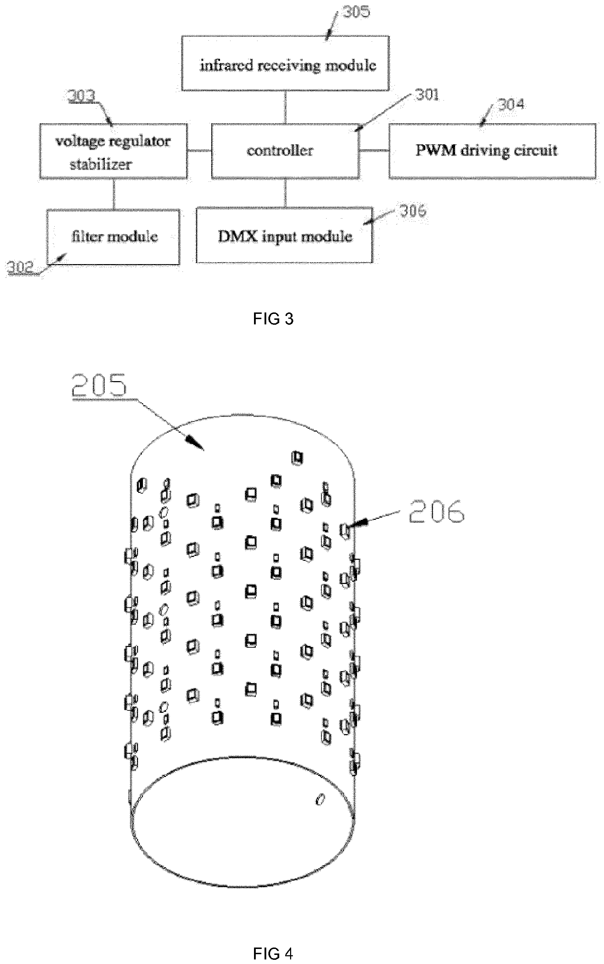

As shown in Figures 1 to 6, a 360-degree LED light-emitting flame lamp comprises a lamp shade 1 and a light source 2 disposed inside the lamp shade 1. The lamp shade 1 includes a styling frame and a light-transmitting portion enclosing the styling frame. The light-transmitting portion may be transparent or frosted. It is preferable to use a frosted light-transmitting portion to scatter light, providing a soft and natural flame effect. As shown in figure 2, the light source 2 comprises a lamp shell 201 and a base 202 provided at one end of the lamp shell 201. A lamp cap 203 is provided on the base 202. A lamp board holder 204 is provided inside the lamp shell 201. The lamp board holder is wrapped with a cylindrical or polyhedral shaped LED circuit board 205. A plurality of LED bulbs 206 are arranged on the LED circuit board 205. The LED circuit board 205, a control circuit board 207, a power supply 208 and the lamp cap 203 are consecutively electrically connected. As shown in figure 3, the control circuit board 207 comprises a controller 301, the controller 301 is connected to a filter module 302 and a voltage regulator stabilizer 303 which are both connected to the power supply 208, and a PWM driving circuit 304 which is connected to the LED circuit board 205. The controller 301 sends timing signals to the PWM driving circuit 304. The PWM driving circuit 304 outputs PWM signals according to the timing signals received to control the on/off and blinking of the LED bulbs 206, achieving a flame-like effect.

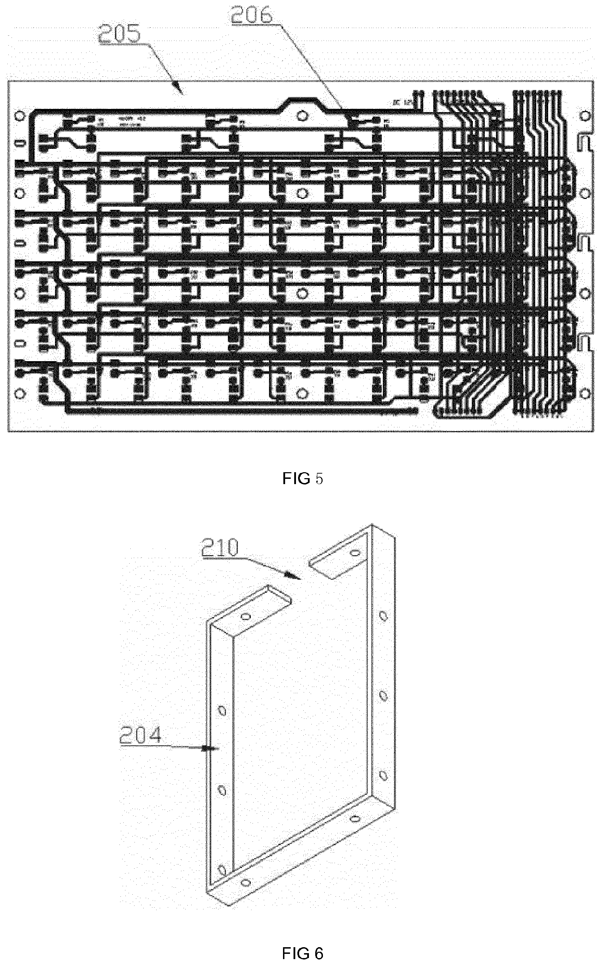

Figure 5 is a schematic view of a circuit layout of an LED circuit board according to an embodiment of the present invention. In order to more vividly simulating the leaping and flickering of flames, as shown in figure 4, the LED bulbs 206 are arranged in a wavy shape on an upper part of the LED circuit board 205, and are arranged in a matrix on middle and lower parts of the LED circuit board 205 in this embodiment. When the upper, wavy-shape arranged LED bulbs 206 are all or successively lit, a flame-tip shape is formed; when the middle and lower, matrix-arranged LED bulbs 206 are lit, shape of a main flame body is formed.

Regarding detailed module design, in the present embodiment, the PWM driving circuit 304 includes a PWM modulation circuit 3041 that is connected to the controller 301 and an IC driving unit 3042 that is connected to the PWM modulation circuit 3041. The IC driving unit 3042 is connected to the LED circuit board 205.

After the above-mentioned module design, the lighting control of the LED circuit board can be achieved according to the present time sequence of the controller. In practice, the ability to further adjust the lighting effect is usually required. To achieve this objective, the controller 301 is further connected to an infrared receiving module 305 and a DMX input module 306 in the present embodiment.

Regarding the design of the infrared receiving module 305 and DMX input module 306, to further stabilize signal transfer, the infrared receiving module 305 comprises an infrared receiving head in the present embodiment. The infrared receiving head is connected to an IO port of a CPU via a pull-up resistor to stabilize signal. The CPU acts as the controller 301. The DMX input module comprises a signal-stabilizing DMX driver IC and an anti-jamming protection circuit.

Regarding the detailed structure design of the lighting source, in the present embodiment, the lamp shell 201 is a cylindrical-shaped hollow shell with two open ends. The base 202 is provided at one open end of the lamp shell 201, a top cover 209 is provided at the other open end of the lamp shell 201. The lamp shell 201, the base 202 and the top cover 209 constitute an external structure of the light source. A hollow interior of the lamp shell 201 is employed for the mounting of the lamp board holder 204, the LED circuit board 205, the control circuit board 207 and the power supply 208.

In the present embodiment, as shown in figure 6, the lamp board holder 204 is a rectangular frame. In practice, it is also possible to make the lamp board holder 204 into other three-dimensional frame shapes, such as cylindrical shapes, frame shapes cross-formed by two or more rectangular frames, and the like.

In the present embodiment, the lamp board holder 204 is provided with an opening 210 on the side of its frame corresponding to the base 202. A wire connecting the power supply 208 and the lamp cap 203 is passed through the opening 201, or the power supply 208 is mounted at the opening 210.

In the present embodiment, the LED circuit board 205 is a flexible LED circuit board. The flexible LED circuit board is wrapped around and fixed to the lamp board holder 204.

Further embodiments of the invention are as follows:
An LED light-emitting flame lamp, comprising a lamp shade (1) and a light source (2) disposed inside the lamp shade (1), wherein the light source (2) comprises a lamp shell (201) and a base (202) provided at one end of the lamp shell (201), a lamp cap (203) is provided on the base (202), a lamp board holder (204) is provided inside the lamp shell, the lamp board holder (204) is wrapped with a cylindrical or polyhedral shaped LED circuit board (205), a plurality of LED bulbs (206) are arranged on the LED circuit board (205), the LED circuit board (205), a control circuit board (207), a power supply (208) and the lamp cap (203) are consecutively electrically connected, the control circuit board (207) comprises a controller (301), the controller (301) is connected to a filter module (302) and a voltage regulator stabilizer (303) which are both connected to the power supply (208), and a PWM driving circuit (304) which is connected to the LED circuit board (205), the controller (301) sends timing signals to the PWM driving circuit(304), the PWM driving circuit (304) outputs PWM signals according to the timing signals received, to control the on/off and blinking of the LED bulbs (206), in order to achieve a flame-like effect.

Preferably, the LED bulbs (206) are arranged in a wavy shape on an upper part of the LED circuit board (205), forming a flame-tip shape; the LED bulbs (206) are arranged in a matrix on middle and lower parts of the LED circuit board (205), forming shape of a main flame body.

Preferably, the PWM driving circuit (304) includes a PWM modulation circuit (3041) that is connected to the controller (301) and an IC driving unit (3042) that is connected to the PWM modulation circuit (3041), the IC driving unit (3042) is connected to the LED circuit board (205).

Preferably, the controller (301) is further connected to an infrared receiving module (305) and a DMX input module (306).

Preferably, the infrared receiving module (305) comprises an infrared receiving head, said infrared receiving head is connected to an IO port of the controller via a pull-up resistor to stabilize signal.

Preferably, the DMX input module (306) comprises a DMX driver IC and an anti-jamming protection circuit.

Preferably, the lamp shell (201) is a cylindrical-shaped hollow shell with two open ends, the base (202) is provided at one open end of the lamp shell (201), a top cover (209) is provided at the other open end of the lamp shell(201).

Preferably, the lamp board holder (204) is one rectangular frame or two or more rectangular frames.

Preferably, the lamp board holder (204) is provided with an opening (210) on the side of its frame corresponding to the base (202), a wire connecting the power supply (208) and the lamp cap (203) is passed through the opening (210), or the power supply (208) is mounted at the opening (210).

Preferably, the LED circuit board (205) is a flexible LED circuit board, said flexible LED circuit board is wrapped around and fixed to the lamp board holder (204).

The above description is only a preferred embodiment of the invention, and is not intended to limit the scope of the invention. Any modifications of equivalent structure or equivalent process made on the basis of the contents of the description and the accompanying drawings of the disclosure, or direct or indirect applications in other related technical fields should also all fall within the scope of patent protection of the disclosure.

## Claims

1. An LED light source (2) comprising: a lamp shell (201) and a base (202) provided at one end of the lamp shell (201), a lamp cap (203) is provided on the base (202), a lamp board holder (204) is provided inside the lamp shell, the lamp board holder (204) is wrapped with a cylindrical or polyhedral shaped LED circuit board (205), a plurality of LED bulbs (206) are arranged on the LED circuit board (205), the LED circuit board (205), a control circuit board (207), a power supply (208) and the lamp cap (203) are consecutively electrically connected, the control circuit board (207) comprises a controller (301), the controller (301) is connected to a filter module (302) and a voltage regulator stabilizer (303) which are both connected to the power supply (208), and a PWM driving circuit (304) which is connected to the LED circuit board (205), the controller (301) sends timing signals to the PWM driving circuit(304), the PWM driving circuit (304) outputs PWM signals according to the timing signals received, to control the on/off and blinking of the LED bulbs (206), in order to achieve a flame-like effect.

2. The LED light source (2) according to claim 1, wherein the LED bulbs (206) are arranged in a wavy shape on an upper part of the LED circuit board (205), forming a flame-tip shape; the LED bulbs (206) are arranged in a matrix on middle and lower parts of the LED circuit board (205), forming shape of a main flame body.

3. The LED light source (2) according to claim 1, wherein the PWM driving circuit (304) includes a PWM modulation circuit (3041) that is connected to the controller (301) and an IC driving unit (3042) that is connected to the PWM modulation circuit (3041), the IC driving unit (3042) is connected to the LED circuit board (205).

4. The LED light source (2) according to claim 1, wherein the controller (301) is further connected to an infrared receiving module (305) and a DMX input module (306).

5. The LED light source (2) according to claim 4, wherein the infrared receiving module (305) comprises an infrared receiving head, said infrared receiving head is connected to an IO port of the controller via a pull-up resistor to stabilize signal.

6. The LED light source (2) according to claim 4, wherein the DMX input module (306) comprises a DMX driver IC and an anti-jamming protection circuit.

7. The LED light source (2) according to claim 1, wherein the lamp shell (201) is a cylindrical-shaped hollow shell with two open ends, the base (202) is provided at one open end of the lamp shell (201), a top cover (209) is provided at the other open end of the lamp shell(201).

8. The LED light source (2) according to claim 1, wherein the lamp board holder (204) is one rectangular frame or two or more rectangular frames.

9. The LED light source (2) according to claim 8, wherein the lamp board holder (204) is provided with an opening (210) on the side of its frame corresponding to the base (202), a wire connecting the power supply (208) and the lamp cap (203) is passed through the opening (210), or the power supply (208) is mounted at the opening (210).

10. The LED light source (2) according to claim 1, wherein the LED circuit board (205) is a flexible LED circuit board, said flexible LED circuit board is wrapped around and fixed to the lamp board holder (204).
